# EUROPEAN PATENT SPECIFICATION

(11) **EP 1 995 894 B1**
(45) Date of publication and mention of the grant of the patent: **25.12.2013**
(21) Application number: 07715207.2
(22) Date of filing: 05.03.2007
(51) Int. Cl.: H04W 48/16

(54) **MOBILE COMMUNICATION SYSTEM, MOBILE TERMINAL DEVICE, FREQUENCY DETECTION METHOD USED FOR THEM, AND PROGRAM THEREOF**
MOBILKOMMUNIKATIONSSYSTEM, MOBILES ENDGERÄT, FÜR DIESE VERWENDETES FREQUENZDETEKTIONSVERFAHREN UND PROGRAMM DAFÜR
SYSTEME DE COMMUNICATION MOBILE, DISPOSITIF TERMINAL MOBILE, PROCEDE DE DETECTION DE FREQUENCE UTILISE POUR EUX ET LEUR PROGRAMME CORRESPONDANT

(30) Priority: 15.03.2006 JP 2006070115
(43) Date of publication of application: 26.11.2008
(73) Proprietor: NEC Corporation, Minato-ku Tokyo 108-8001 (JP)
(72) Inventor: KURIYAMA, Takahiro, c/o NEC CORPORATION, Tokyo 108-8001 (JP)
(74) Representative: Betten & Resch
(86) International application number: PCT/JP2007/054182
(87) International publication number: WO 2007/108305

(56) References cited:
- EP-A2- 1 225 722
- EP-A2- 1 283 608
- WO-A1-00/78075
- WO-A1-2004/036940
- JP-A- 2003 060 551
- JP-A- 2004 215 259
- JP-A- 2006 500 878
- US-A1- 2004 248 585
- US-A1- 2005 176 427
- US-A1- 2006 030 318

## Description

### FIELD OF THE INVENTION

The invention relates to a mobile communication system, a mobile terminal device to be used in the mobile communication system, a method of detecting a frequency to be used in the mobile communication system and the mobile terminal device, and a program for carrying out the method, and more particularly to a method of detecting a frequency to be used in a mobile terminal device such as a mobile phone device making communication through a plurality of radio-signal communication systems and at a plurality of frequency bands.

### BACKGROUND ART

A radio-signal communication system for a mobile phone system can be grouped into a TDMA (Time Division Multiple Access) system and a CDMA (Code Division Multiple Access) system. Furthermore, the TDMA system includes a plurality of radio-signal communication systems such as GSM (Global System for Mobile Communications) and PDC (Personal Digital Cellular), and the CDMA system includes a plurality of radio-signal communication systems such as W-CDMA (Wideband-CDMA), cdma 2000, and TD-SCDMA (Time Division-System Code Division Multiple Access) (for instance, see the non-patent reference 1).

As mentioned above, there are various radio-signal communication systems as a radio-signal communication system to be used for a mobile phone system. A particular frequency is assigned to each of radio-signal communication systems such that a common frequency is not used in different radio-signal communication systems from one another.

However, since frequencies are finite, a common frequency band is used in different radio-signal communication systems in a mobile phone system. For instance, frequencies between 800 MHz and 2 GHz are used in GSM and PDC both called the second generation, and in W-CDMA and cdma 2000 both called the third generation. Used frequencies are different from one another in each of countries.

On the other hand, with development of global roaming by internationalization, there is generally used a mobile phone device which is able to conform to a plurality of radio-signal communication systems or to a plurality of frequency bands. For instance, there is already actually used a mobile phone device which is able to conform to triple bands (GSM 900, DCS 1800, PCS 1900) or quad bands (GSM 850, GSM 900, DCS 1800, PCS 1900), or dual modes (GSM, W-CDMA) or triple modes (GSM, W-CDMA, cdma 2000).

While various frequencies are used in each of countries in the world, there is a demand that a single mobile phone device is able to conform to a greater number of radio-signal communication systems or frequency bands. In order to make a single mobile phone device conform to a plurality of radio-signal communication systems or a plurality of frequency bands, it is necessary for a mobile phone device to be able to detect a radio-signal communication system in which a particular frequency is used. Such detection of a radio-signal communication system would take a longer time or consume a current much more as a mobile phone is necessary to conform to a greater number of radio-signal communication systems or frequency bands.

Accordingly, it is necessary to effectively identify a radio-signal communication system and detect a frequency.
Non-patent reference 1: "W-CDMA mobile communication system chapter 1 abstract" supervised by Keiji Tachikawa (published by Maruzen Kabushiki Kaisha on June 25, 2001, pp. 1-21)

US 2004/248585 A1 relates to a method and apparatus for communication frequency determination. The method for communication frequency determination comprises at least partially determining the location of a wireless device, determining one or more wireless network frequencies based at least in part on the location, and scanning at least a portion of the one or more wireless network frequencies. The location may comprise a geographic location, and may be determined by a positioning device, such as a geographic positioning system.

WO 2004/036940 A1 discloses a mobile terminal allowing to identify cellular control channels that can be received by the mobile terminal from a cellular system, by identifying a cellular control channel that can be received from a history list of cell control channels that were previously received by the mobile terminal. The cellular control channel received by the mobile terminal is scanned for, by skipping at least one cellular control channel that is adjacent, the cellular control channel that was identified, based on channel location rules in the cellular system.

EP 1283608 A2 discloses a carrier detection method in a CDMA mobile communication system. For detecting service carries by said method, a received power measuring section initially carries out received power measurement in a frequency band assigned to the system, a frequency limiting section limits a service carrier seeking frequency range to the vicinity of a frequency where thus measured received power exceeds a threshold, the received power measuring section measures the received power at a frequency where a service carrier may exist within this frequency range, and the controller 24 chooses a frequency yielding a high measured received power as a service carrier candidate frequency. The cell search then is executed for this candidate frequency by the cell search executing section.

### DISCLOSURE OF THE INVENTION

### PROBLEMS TO BE SOLVED BY THE INVENTION

A mobile phone device which is typical of a mobile station detects a stand-by cell by carrying out measuring a strength of an electric field of a received signal, cell-searching for synchronizing with a cell conforming to a certain radio-signal communication system, and receiving annunciation data transmitted from a base station.

While being in a stand-by mode, a mobile station searches cells existing therearound in accordance with frequency data includes in adjacent-cell data included in annunciation data transmitted from a base station, to thereby choose a qualified cell among a plurality of cells. Furthermore, a mobile station memorizes frequency having been used and frequencies of adjacent cells, and uses a frequency having been used immediately before or in the past when a power thereof is on or when it is in an area where radio-signals cannot reach thereto, to thereby be able to detect a stand-by cell for a short period of time.

If a mobile station conforms to a plurality of radio-signal communication systems or a plurality of frequency bands, the mobile station memorizes frequencies used in each of radio-signal communication systems, and makes use of data about a radio signal communication system or a frequency band having been used immediately before or in the past when a power thereof is on or when it is in an area where radio-signals cannot reach thereto, to thereby be able to detect a stand-by cell for a short period of time.

However, the above mentioned process is accompanied with a problem that if a mobile station is located in a strange area, the mobile station has to carry out cell-searching through all of radio-signal communication systems to which the mobile station conforms and at all frequencies in all of frequency bands, resulting in that cell-searching takes long time and consumes much current

Furthermore, when a mobile station often moves between areas in which different radio signal communication systems from each other and different frequencies from each other are used, it is sometimes impossible to detect a stand-by cell in a short period of time.

Furthermore, when a mobile phone device is located out of a service area in which the mobile phone device cannot detect a network, or when a network with which a mobile phone device is able to make communication is detected in an automatic network selection process in which a network having a higher priority that of a presently selected network is to be selected, or in a manual network selection process in which a user of a mobile phone device selects a network to be used, it is necessary for a mobile phone device to carry out cell-searching through all of radio signal communication systems the mobile phone device conforms to or at all of frequencies the mobile phone device conforms to, resulting tin a problem that it would take much time for carrying out cell-searching, and power consumption for carrying out cell-searching would increase.

In accordance with a certain related process, since it takes a short period of time (accordingly, power consumption is small) for measuring a strength of an electric field of received signals in comparison with carrying out cell-searching or receiving annunciation data (accordingly, power consumption is small), it is possible to shorten a period of time necessary for carrying out cell-searching and reduce power consumption by carrying out cell-searching in an order of a strength of an electric field of received signals after strengths of electric fields of received signals have been measured, or by carrying out cell-searching only for frequencies corresponding to strengths of electric fields of received signals higher than a predetermined strength.

However, since it is not possible in the above-mentioned process to identify a radio-signal communication system in measurement of strengths of electric fields of received signals, cell-searching may be carried out in synchronization with a cell at a frequency at which a different radio-signal communication system operates, resulting in that the cell-searching is in vain.

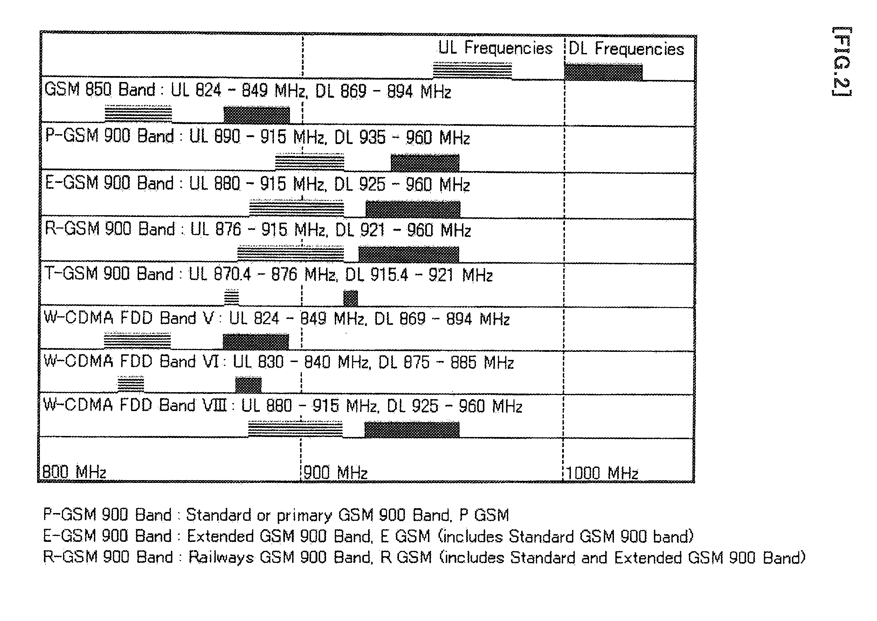

Hereinbelow is explained the above-mentioned problem with reference to FIGs. 2 to 5, using GSM and W-CDMA as an example of a radio signal communication system.

A frequency to be used in GSM is defined in 3GPP TS 45.001 (non-patent reference 2), and a frequency to be used in W-CDMA is defined m 3GPP TS 25.101 (non-patent reference 3)

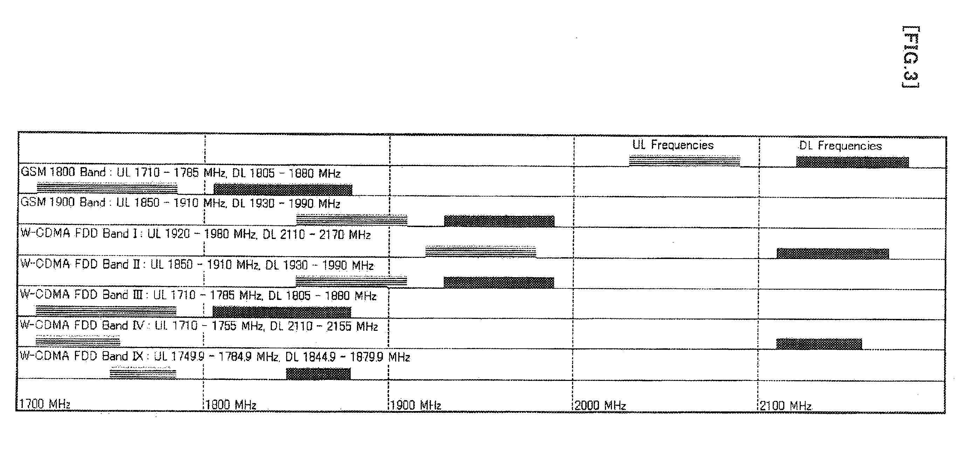

FIG. 2 shows frequency bands for GSM and W-CDMA FDD (Frequency Division Duplex) both of which operate at a frequency in the range of 800 MHz and 1000 MHz both inclusive. FIG. 3 shows frequency bands for GSM and W-CDMA FDD both of which operate at a frequency in the range of 1700 MHz and 2200 MHz both inclusive.

As shown in FIGs. 2 and 3, frequency bands which GSM may select overlap frequency bands which W-CDMA FDD may select. It depends on a country that which radio-signal communication system is used in which frequency band.

For instance, in FIG. 3, when a frequency band in W-CDMA FDD Band I is selected, a frequency in the range of 1920 MHz and 1980 MHz is used as an UL (UpLink: a direction to a base station from a mobile station) frequency. A DL (DownLink: a direction to a mobile station from a base station) frequency expected to be used in GSM 1900 or W-CDMA FDD Band II is in the range of 1930 MHz and 1990 MHz. A frequency in the range of 1930 MHz and 1980 MHz overlaps each other.

Thus, since frequencies in the range of 1930 MHz and 1980 MHz are equal to or higher in strength of an electric filed of received signals than a predetermined strength, a mobile station carries out cell-searching, regardless that those frequencies are of frequencies for W-CDMA FDD Band I, assuming that there exists a DL frequency of GSM 1900 Band or a DL frequency of W-CDMA FDD Band II. As a result, this cell-searching wastes time and current in vain.

As shown in FIGs. 2 and 3, GSM 850 Band and W-CDMA FDD Band V are defined to have a common frequency band in both UL and DL (UL: 824-849 MHz, DL: 869-894 MHz). Similarly E-GSM 900 Band and W-CDMA FDD Band VIII are defined to have a common frequency band in both UL and DL (UL: 880-915 MHz, DL: 925-960 MHz). Similarly, GSM 1800 Band and W-CDMA FDD Band III are defined to have a common frequency band in both UL and DL (UL: 1710-1785 MHz, DL: 1805-1880 MHz). Similarly, GSM 1900 Band and W-CDMA FDD Band II are defined to have a common frequency band in both UL and DL (UL: 1850-1910 MHz, DL: 1930-1990 MHz). Which radio-signal communication system is used depends on a country of an operator.

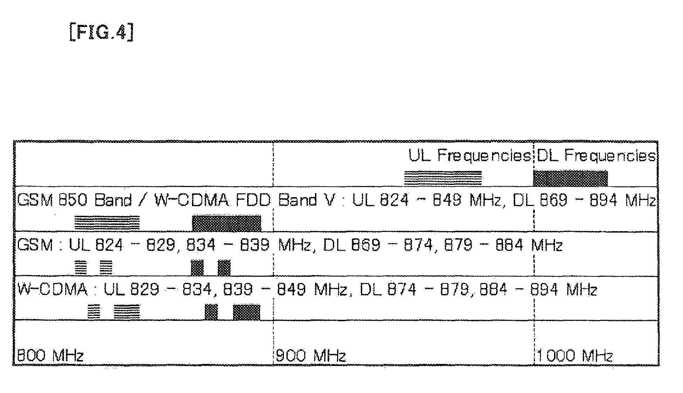

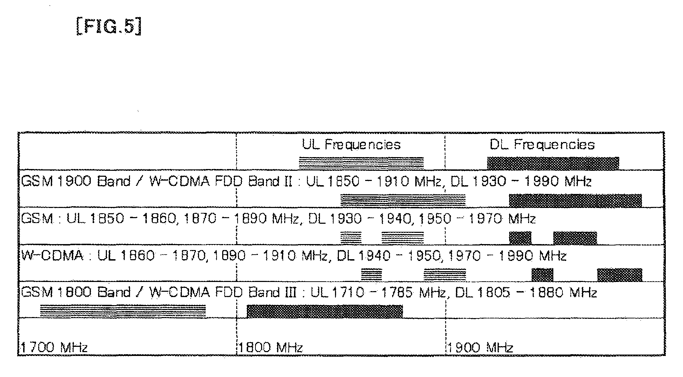

FIGs. 4 and 5 show examples of frequency arrangement defined when a radio-signal communication system depends on an operator, in a process of changing into W-CDMA as the third generation from GSM as the second generation.

Though there may be defined a guard band (a frequency band not used by any radio-signal communication system) in order to avoid interference among radio-signal communication systems when there are different radio-signal communication systems from one another, a guard band is not defined in the examples.

FIG. 4 shows an example of frequency arrangement defined when GSM and W-CDMA operate in each of frequency bands of GSM 850 Band and W-CDMA FDD Band V. FIG. 5 shows an example of frequency arrangement defined when GSM and W-CDMA operate in each of frequency bands of GSM 1900 Band and W-CDMA FDD Band II.

FIG. 5 further shows frequency bands of GSM 1800 Band and W-CDMA FDD Band III, and indicates that there is caused a problem in cell-searching in GSM 1800 Band and GSM 1900 Band when a frequency for W-CDMA FDD Band II is used.

In view of the above-mentioned problems in the existing radio-signal communication system, it is an object of the present invention to provide a radio-signal communication system, a mobile terminal device to be used in the radio-signal communication system, a method of detecting a frequency used in the radio-signal communication system and the mobile terminal device, and a program for carrying out the method all of which are capable of effectively detecting an actually used frequency.

### SOLUTION TO THE PROBLEMS

The present invention is defined in the independent claims. The dependent claims define embodiments.

### ADVANTAGES PROVIDED BY THE INVENTION

In accordance with the present invention, it is possible to effectively detect an actually used frequency, when a mobile terminal device having a function of making communication thorough a plurality of radio-signal communication systems and at a plurality of frequency bands makes communication with a base station.

### BRIEF DESCRIPTION OF THE DRAWINGS

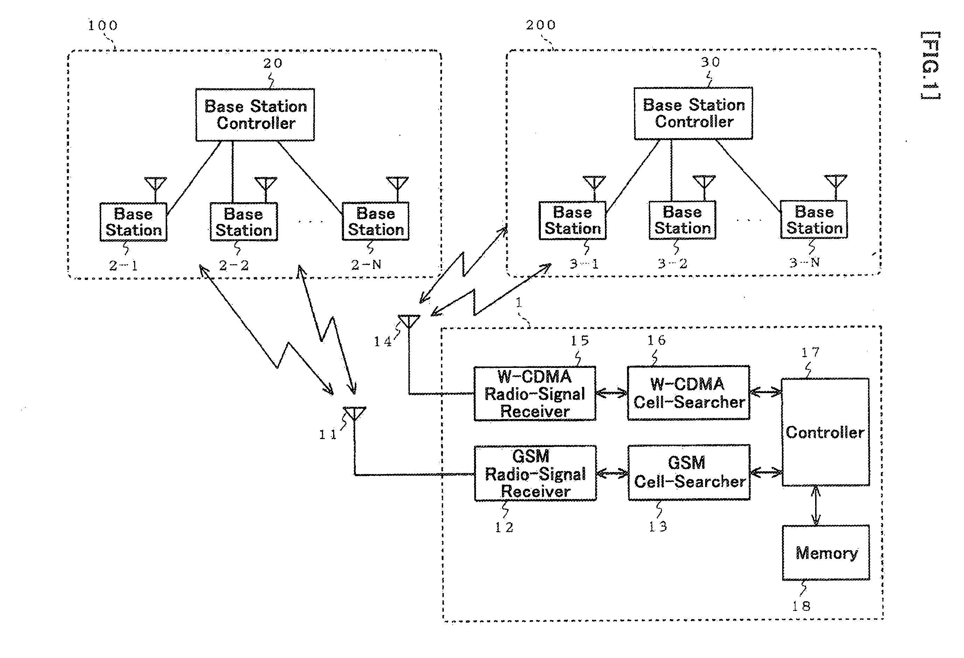

[FIG. 1] FIG. 1 is a block diagram illustrating a structure of a mobile communication system in accordance with an exemplary embodiment of the present invention.
[FIG. 2] FIG. 2 shows a frequency band for GSM and a frequency band for W-CDMA FDD both in the range of 800 MHz and 1000 MHz both inclusive.
[FIG. 3] FIG. 3 shows a frequency band for GSM and a frequency band for W-CDMA FDD both in the range of 1700 MHz and 2200 MHz both inclusive.
[FIG. 4] FIG. 4 shows an example of frequency arrangement defined when GSM and W-CDMA operate in each of frequency bands of GSM 850 Band and W-CDMA FDD Band V.
[FIG. 5] FIG. 5 shows an example of frequency arrangement defined when GSM and W-CDMA operate in each of frequency bands of GSM 1900 Band and W-CDMA FDD Band II.

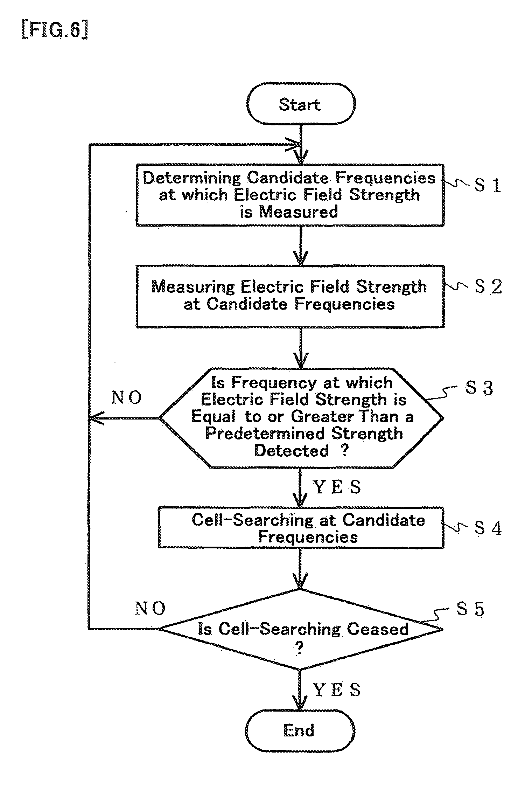

[FIG. 6] FIG. 6 is a flow-chart showing steps which a mobile phone device repeatedly carries out when a power of the mobile phone device is on, when the mobile phone device is located out of a service area, or when the mobile phone device is in a stand-by mode.

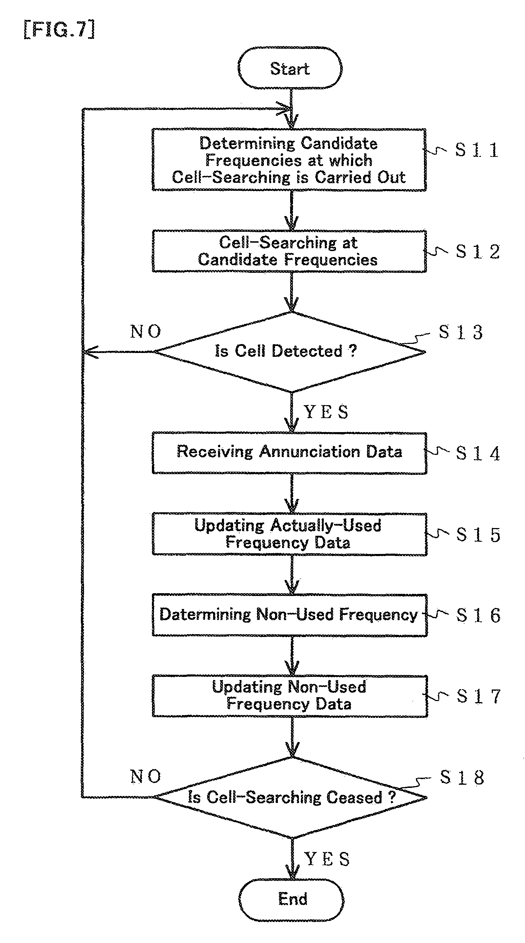

[FIG. 7] FIG. 7 is a flow-chart showing steps to be carried out in the step (step S4 in FIG. 6) for carrying out cell-searching at a candidate frequency.

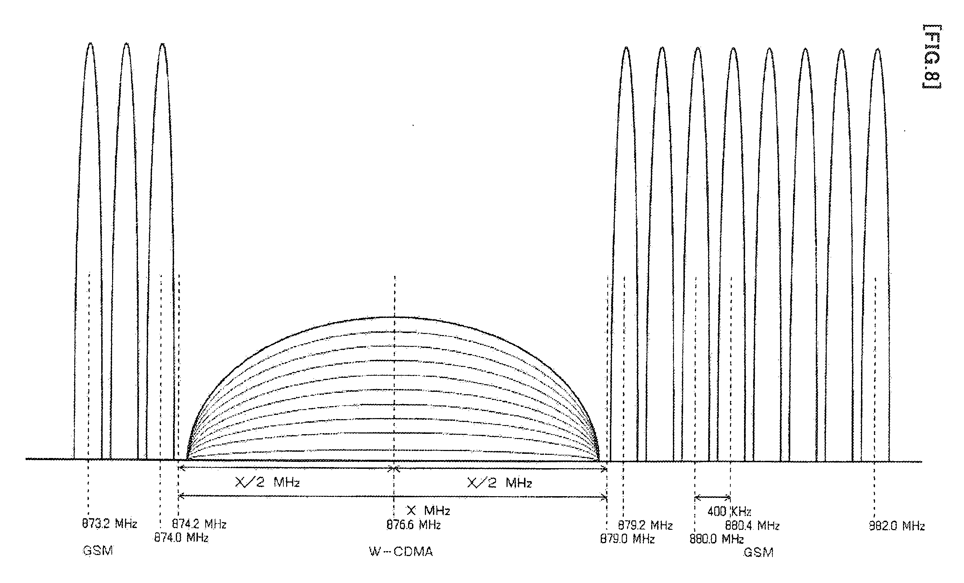

[FIG. 8] FIG. 8 illustrates a method of determining a non-used frequency (step S16 in FIG. 7).

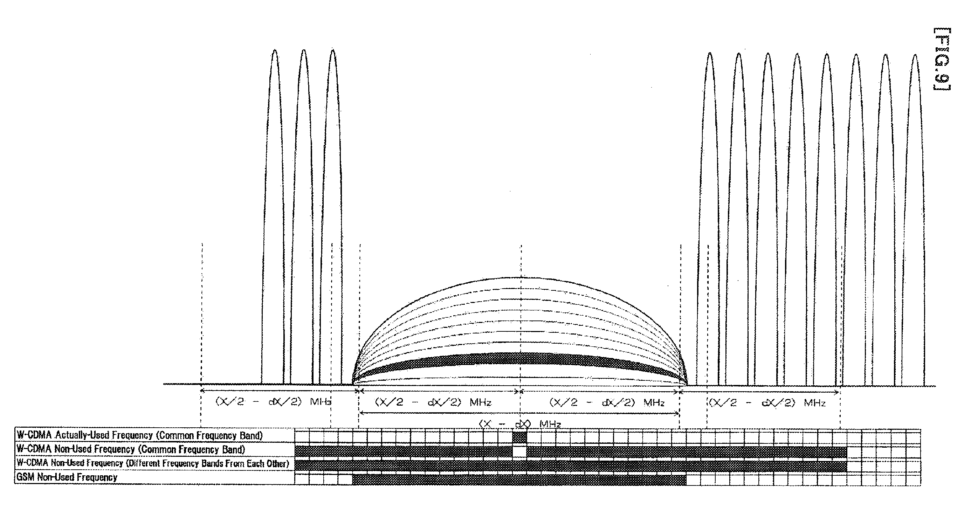

[FIG. 9] FIG. 9 illustrates a method of determining a non-used frequency (step S16 in FIG. 7).

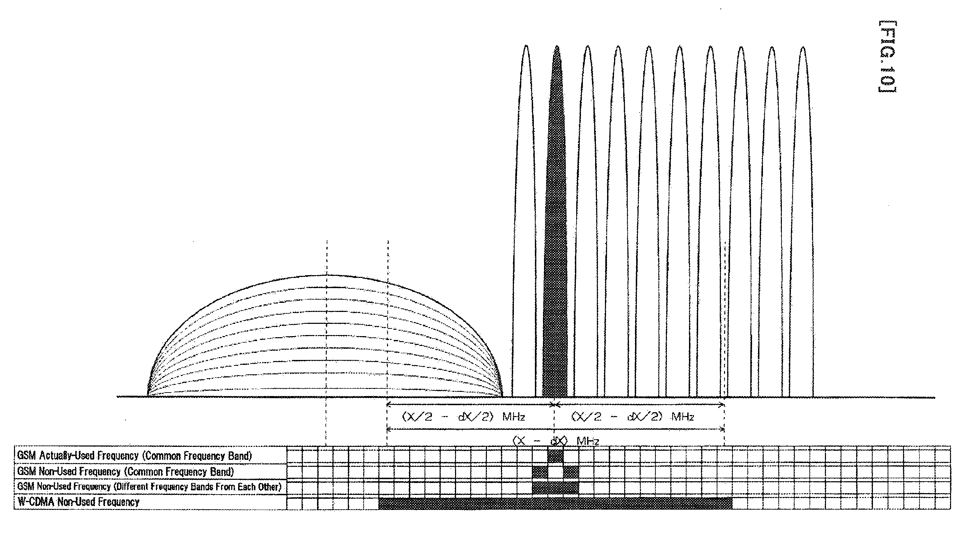

[FIG. 10] FIG. 10 illustrates a method of determining a non-used frequency (step S16 in FIG. 7).

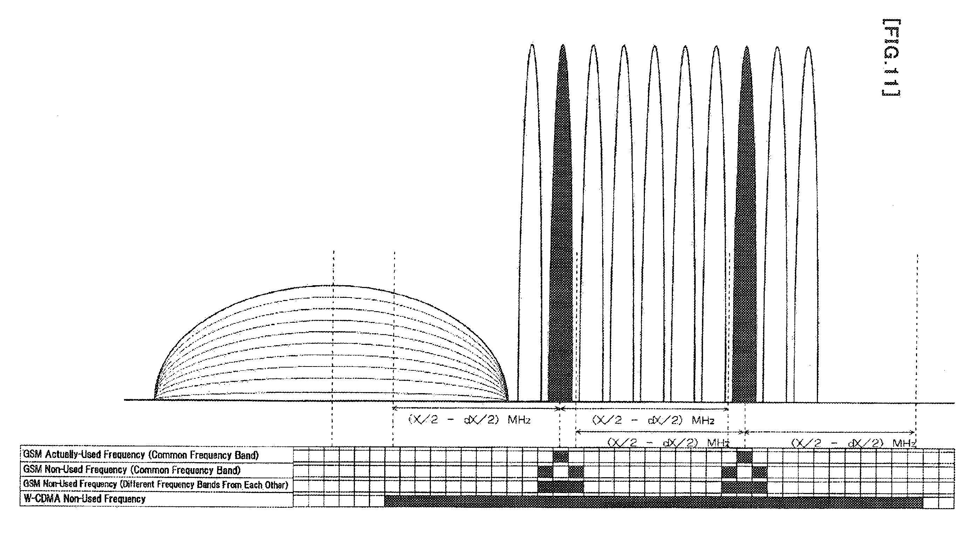

[FIG. 11] FIG. 11 illustrates a method of determining a non-used frequency (step S16 in FIG. 7).

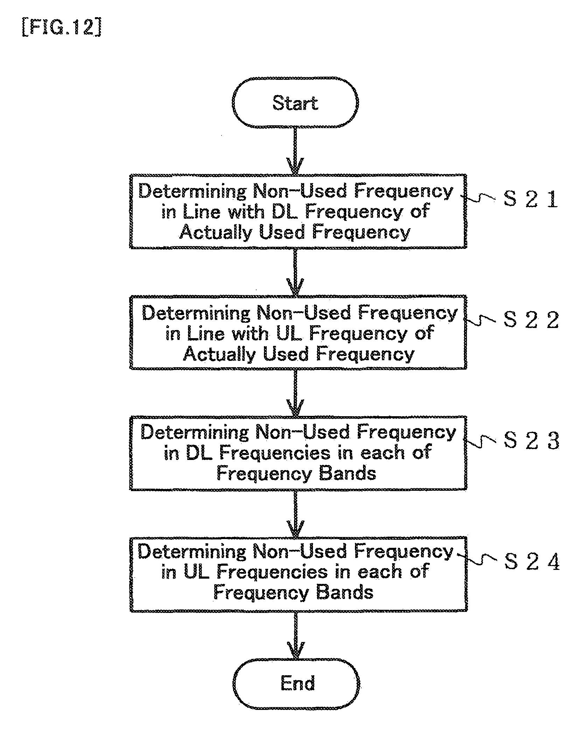

[FIG. 12] FIG. 12 is a flow-chart showing steps to be carried out in a method of determining a non-used frequency (step S16 in FIG. 7).

### INDICATION BY REFERENCE NUMERALS

- 1: Mobile phone device
- 2-1 to 2-N: GSM base stations
- 3-1 to 3-N: W-CDMA base stations
- 11: GSM antenna
- 12: GSM radio-signal receiver
- 13: GSM cell-searcher
- 14: W-CDMA antenna
- 15: W-CDMA radio-signal receiver
- 16: W-CDMA cell-searcher
- 17: Controller
- 18: Memory
- 20: GSM base station controller
- 30: W-CDMA base station controller
- 100: GSM network
- 200: W-CDMA network

### BEST EMBODIMENT FOR REDUCING THE INVENTION TO PRACTICE

An exemplary embodiment in accordance with the present invention will be explained hereinbelow with reference to drawings.

FIG. 1 is a block diagram illustrating a structure of a mobile communication system in accordance with an embodiment of the present invention.

As illustrated in FIG. 1, the mobile communication system in accordance with the embodiment is comprised of a mobile phone device 1, a GSM network 100 making communication with the mobile phone device 1. and a W-CDMA network 200 making communication with the mobile phone device 1.

The mobile phone device 1 is comprised of a GSM (Global System for Mobile Communications) antenna 11, a GSM radio-signal receiver 12, a GSM cell-searcher 13, a W-CDMA (Wideband-Code Division Multiple Access) antenna 14, a W-CDMA radio-signal receiver 15, a W-CDMA cell-searcher 16, a controller 17, and a memory 18.

The GSM network 100 is comprised of N GSM-type base stations 2-1, 2-2,···,2-N, and a GSM-type base station controller 20 controlling operation of the base stations 2-1, 2-2,···,2-N.

The W-CDMA network 200 is comprised of N W-CDMA-type base stations 3-1, 3-2,···,3-N, and a W-CDMA-type base station controller 30 controlling operation of the base stations 3-1, 3-2,···,3-N.

The GSM antenna 11 equipped in the mobile phone device 1 receives radio-signals from the base stations 2-1 to 2-N controlled by the base station controller 20 in the GSM network 100.

The GSM radio-signal receiver 12 demodulates radio-signals received by the GSM antenna 11.

The GSM cell-searcher 13 controls the demodulation carried out by the GSM radio-signal receiver 12 in accordance with a request transmitted from the controller 17, measures a strength of an electric field of received signals, and carries out cell-searching in synchronization with a GSM cell, to thereby receive annunciation data transmitted from the GSM-type base stations 2-1 to 2-N.

The W-CDMA antenna 14 equipped in the mobile phone device 1 receives radio-signals from the base stations 3-1 to 3-N controlled by the base station controller 30 in the W-CDMA network 200.

The W-CDMA radio-signal receiver 15 demodulates radio-signals received by the W-CDMA antenna 14.

The W-CDMA cell-searcher 16 controls the demodulation carried out by the W-CDMA radio-signal receiver 15 in accordance with a request transmitted from the controller 17, measures a strength of an electric field of received signals, and carries out cell-searching in synchronization with a W-CDMA cell, to thereby receive annunciation data transmitted from the W-CDMA -type base stations 3-1 to 3-N.

The controller 17 updates GSM actually used frequency data stored in the memory 18, in accordance with a DL (DownLink: a direction to a mobile station from a base station) frequency of a GSM cell having been detected in the GSM cell-searcher 13, and further updates W-CDMA actually used frequency data stored in the memory 18, in accordance with a DL frequency of a W-CDMA cell having been detected in the W-CDMA cell-searcher 16.

The controller 17 further determines a non-used frequency not used in each of frequency bands in accordance with those actually used frequency data, and updates both GSM non-used frequency data and W-CDMA non-used frequency data both stored in the memory 18, in accordance with the thus determined non-used frequency.

The controller 17 further requests the GSM cell-searcher 13 or the W-CDMA cell-searcher 16 to carry out cell-searching only at frequencies except non-used frequencies, which may be presently used.

The memory 18 stores frequency data for each of GSM frequency bands and each of W-CDMA frequency bands.

The frequency data is comprised of actually used frequency data and non-used frequency data.

Each of actually used frequency data and non-used frequency data expresses all of central frequencies to be determined every 200 KHz in frequency bands used in GSM and W-CDMA FDD (Frequency Division Duplex) as shown in FIGs. 2 to 5. For instance, each of actually used frequency data and non-used frequency data can be expressed as a bit row convertible to each of central frequencies.

The memory 18 may store UL (UpLink: a direction from a mobile station to a base station) frequencies and DL frequencies as frequency data. As an alternative, the memory 18 may store a UL frequency and a DL frequency in a set, since a difference between a central frequency of UL frequencies and a central frequency of DL frequencies is constant.

FIG. 6 is a flow-chart showing steps which the mobile phone device 1 repeatedly carries out when a power of the mobile phone device I is on, when the mobile phone device 1 is located out of a service area, or when the mobile phone device 1 is in a stand-by mode, FIG. 7 is a flow-chart showing steps to be carried out in the step (step S4 in FIG. 6) of carrying out cell-searching at a candidate frequency, FIGs. 8 to 11 illustrate a method of determining a non used frequency (step S16 in FIG. 7), and FIG. 12 is a flow-chart showing steps to be carried out in a method of determining a non-used frequency (step S16 in FIG 7)

Herembelow, a method of detecting a frequency in the mobile communication system in accordance with the embodiment of the present invention is explained with reference to FIGs. 1 to 12

For instance, the controller 17 is comprised of a central processing umt (CPU), and operates in accordance with a program stored in the memory 18 In other words, the steps shown in FIGs. 6, 7 and 12 are carried out when the controller 17 carries out the program stored in the memory 18.

With reference to FIG. 6, there is explained steps repeatedly carried out by the mobile phone device 1 when a power of the mobile phone device 1 is on, when the mobile phone device 1 is located out of a service area, or when the mobile phone device 1 is in a stand-by mode.

The controller 17 determines a plurality of candidate frequencies at which a strength of an electric field of received signals is measured, in accordance with the frequency data stored in the memory 18 (step S1).

The controller 17 requests the GSM cell-searcher 13 or the W-CDMA cell-searcher 16 to measure a strength of an electric field of received signals only at the candidate frequencies having been determined at step S1. The GSM cell-searcher 13 or the W-CDMA cell-searcher 16 carries out measurement of a strength of an electric field of received signals at the candidate frequencies in compliance of a request received from the controller 17 (step S2).

The controller 17 judges whether a frequency associated with a strength of an electric field equal to or greater than a predetermined strength is detected in step S2 (step S3).

If a frequency associated with a strength of an electric field equal to or greater than a predetermined strength is not detected (NO in step S3), the controller 17 determines a plurality of candidate frequencies at which a strength of an electric field of received signals is measured (step S1).

If a frequency associated with a strength of an electric field equal to or greater than a predetermined strength is detected (YES in step S3), the controller 17 carries out cell-searching at the candidate frequencies, based on the results of measurements of a strength of an electric field in step S2, and the frequency data stored in the memory 18 (step S4).

Thereafter, the controller 17 judges whether cell-searching is to be ceased, in accordance with the results of carrying out the above-mentioned steps S1 to S4 (step S5).

The controller 17 ceases carrying out cell-searching when the candidate frequencies at which cells in GSM or W-CDMA may operate are all detected, or when a selected network is detected to thereby transfer into a stand-by mode in the case that the mobile phone device 1 is powered on and is located out of a service area (YES in step S5).

If cell-searching is not to be ceased (NO in step S5), the steps S1 to S4 are repeatedly carried out.

A method of determining a plurality of candidate frequencies at which a strength of an electric field for receiving signals is measured in step S1 in FIG. 6 may be comprised of (1) a step of limiting the candidate frequencies to a small number of frequencies having been used immediately before or in the past, in accordance with the actually-used frequency data stored in the memory 18, (2) a step of limiting the candidate frequencies to a radio-signal communication system or a frequency band having been used immediately before or in the past, in accordance with the actually-used frequency data stored in the memory 18, (3) a step of selecting all frequencies as candidates without limiting the candidate frequencies to certain frequencies, and (4) a step of limiting the candidate frequencies to frequencies which may be used, without non-used frequencies, in accordance with the non-used frequency data stored in the memory 18.

The above-mentioned steps (1), (2), and (3) were carried out in the related art. The present invention is characterized in carrying out the step (4). However, it should be noted that not only the step (4), but also the steps (1), (2) and (3) are carried out in dependence on status of the mobile phone device 1.

Hereinafter, the step of carrying out cell-searching at the candidate frequencies (step S4 in FIG. 6) is explained with reference to FIG. 7.

The controller 17 determines candidate frequencies at which cell-searching is to be carried out, in an order in which a higher strength of an electric field for receiving signals is earlier selected, in accordance with the result of measurement (step S2 in FIG. 6) of a strength of an electric field for receiving signals, and the frequency data stored in the memory 18 (step S11)

The controller 17 requests the GSM cell-searcher 13 or the W-CDMA cell-searcher 16 to carry out cell-searching at the candidate frequencies having been determined in step S11.

The GSM cell-searcher 13 or the W-CDMA cell-searcher 16 carries out cell-searching at the candidate frequencies in compliance with the request received from the controller 17 (step S12).

The controller 17 judges whether a cell can be detected by the cell-searching having been carried out in step S12 (step S13).

If a cell cannot be detected (NO in step S13), the controller 17 again determines candidate frequencies at which cell-searching is to be carried out, in step S11.

If a cell can be detected (YES in step S13), the controller 17 carries out a step of receiving annunciation data (step S 14).

The controller 17 calculates a UL frequency of a GSM cell in accordance with a DL frequency of a GSM cell having been detected by the GSM cell-searcher 13 in step S12, and updates the GSM actually-used frequency data stored in the memory 18, in accordance with the DL and UL frequencies of the GSM cell (step S15).

Furthermore, the controller 17 calculates a UL frequency of a W-CDMA cell in accordance with a DL frequency of a W-CDMA cell having been detected by the W-CDMA cell-searcher 16 in step S12, and updates the W-CDMA actually-used frequency data stored in the memory 18, in accordance with the DL and UL frequencies of the W-CDMA cell (step S15).

Then, the controller 17 determines GSM non-used frequencies and W-CDMA non-used frequencies in accordance with the actually used frequencies (step S16), and updates the GSM non-used frequency data and the W-CDMA non-used frequency data both stored in the memory 18 (step S17).

Then, the controller 17 judges whether the step of carrying out cell-searching is to be ceased, in accordance with the results of carrying out the above-mentioned steps S11 to S17 (step S18).

The controller 17 ceases carrying out cell-searching when the candidate frequencies at which a strength of an electric field for receiving signals higher than a predetermined strength was detected are all detected in the step of measuring a strength of an electric field for receiving signals (step S12 in FIG. 6), or when a selected network is detected to thereby transfer into a stand-by mode in the case that the mobile phone device 1 is powered on and is located out of a service area (YES in step S18).

If cell-searching is not to be ceased (NO in step S18), the steps S11 to S17 are repeatedly carried out.

Hereinbelow, a method of determining a non-used frequency (step S16 in FIG. 7) is explained with reference to FIGs. 8 to 11.

When radio-signal communication systems different from one another are used, though there may be defined a guard band (a frequency band not used by any radio-signal communication system) in order to avoid interference among the radio-signal communication systems, a guard band is not defined in the examples shown in FIGs. 8 to 11.

FIG. 8 illustrates an example of frequency arrangement in the case that GSM and W-CDMA operate at frequencies adjacent to each other.

For simplification, FIG. 8 illustrates central frequencies among frequencies 873.2 MHz to 882.0 MHz corresponding to DL frequency bands of GSM 850 Band and W-CDMA FDD Band V. That is, FIG. 8 illustrates an example in which GSM operate at six frequencies in the range of 873.2 MHz and 874.0 MHz and fifteen frequencies in the range of 879.2 MHz and 882.0 MHz, and W-CDMA operates at a frequency of 876.6 MHz.

In FIG. 8, an interval between central frequencies in W-CDMA is expressed as X MHz. Since a diffusion band in W-CDMA is generally 5 MHz, FIG. 8 illustrates that an interval between the central frequencies in W-CDMA is 4.8 MHz (specifically, 874.2 MHz to 879.0 MHz).

Since an interval between carrier waves in GSM is 400 KHz (200 MHZ interleave), an interval between central frequencies in GSM is set equal to 400 KHz.

FIG. 9 illustrates a relation between the actually-used frequency data and the non-used frequency data in the case that a W-CDMA cell is detected.

Hereinbelow, a method of determining a non-used frequency (step S16 in FIG. 7) in the case that a W-CDMA cell is detected is explained with reference to FIG. 9.

Since it is considered that common frequencies are not used in radio-signal communication systems in order to avoid interference among those radio-signal communication systems, it is expected that when a W-CDMA cell is detected, other frequencies do not exist around a detected frequency within a range of X/2 MHz.

In the current embodiment, a non-used frequency is defined as a central frequency included in a non-used frequency band in which a certain frequency is considered not to exist. In order to ensure that the certain frequency does not exist, "dX" (for instance, about 400 KHz) is introduced to thereby define a non-used frequency band as (X-dX) MHz.

When a W-CDMA cell is detected, with respect to a frequency band identical with W-CDMA actually-used frequency, non-used frequencies are defined as frequency bands of (X-dX) MHz around the W-CDMA actually-used frequency, except the W-CDMA actually-used frequency.

With respect to a frequency band different from a W-CDMA actually-used frequency, non-used frequencies are defined as frequency bands of (X-dX) MHz around the W-CDMA actually-used frequency

Frequency bands of (X/2 - dX/2) MHz existing around a W-CDMA actually-used frequency are defined as a GSM non-used frequency.

FIGs. 10 and 11 illustrate a relation between actually-used frequency data and non-used frequency data in the case that a GSM cell is detected.

Hereinbelow, a method of determining non-used frequency (step S16 in FIG. 7) in the case that a GSM cell is detected is explained with reference to FIG. 10.

When a GSM cell is detected, since GSM cells are considered to exist in a 400 KHz band therearound, with respect to a frequency band identical with a GSM actually-used frequency, non-used frequencies are defined as frequency bands of 200 KHz around the GSM actually-used frequency.

With respect to a frequency band different from a GSM actually-used frequency, non-used frequencies are defined as the GSM actually-used frequency and frequency bands of 200 KHz around the GSM actually-used frequency.

It is not considered that a central frequency in W-CDMA exists in X/2 MHz bands around a GSM actually-used frequency. Accordingly, using dX similarly to the above-mentioned manner, a W-CDMA non-used frequency is defined as frequency bands of (X/2 - dX/2) MHz around a GSM actually-used frequency.

FIG. 11 illustrates an example in which when a GSM cell is detected. (X/2 - dX/2) MHz bands around the GSM actually-used frequency are also defined as a W-CDMA non-used frequency.

The step of determining a non-used frequency (step S16 in FIG. 7) is explained hereinbelow with reference to FIG. 12.

The controller 17 determines a non-used frequency in accordance with a DL frequency of an actually used frequency, in accordance with the above-mentioned process (step S21).

Furthermore, the controller 17 determines a non-used frequency in accordance with a UL frequency of an actually used frequency (step S22).

If the non-used frequencies having been determined in steps S21 and S22 are included in a DL frequency of each of frequency bands, the controller 17 defines the DL frequency together with an UL frequency associated with the DL frequency as a non-used frequency in each of frequency bands (step S23).

If the non-used frequencies having been determined in steps S21 and S22 are included in a UL frequency of each of frequency bands, the controller 17 defines the UL frequency together with a DL frequency associated with the UL frequency as a non-used frequency in each of frequency bands (step S24).

As mentioned above, in accordance with the present embodiment, there are determined frequencies not used in a frequency band associated with each of radio-signal communication systems, in accordance with both the radio-signal communication systems using particular frequencies, and the frequencies, and cell-searching for the non-used frequencies is not carried out Thus, it is possible to omit wastefully carrying out cell searching, and hence, reduce power consumption. In particular, if radio-signal communication systems different from one another operate in a common frequency band, it would be possible almost not to wastefully carry out cell searching

In the present embodiment, in accordance with both radio-signal communication systems using particular frequencies, and the frequencies, frequencies not used in a frequency band associated with each of the radio-signal communication systems are determined, and cell-searching is carried out only for a frequency which may be used in a radio-signal communication system, except the non-used frequencies Thus, it is possible to shorten a period of time necessary for carrying out cell-searching, and effectively detect a frequency which is actually used In particular, the present embodiment is effective in the case that radio-signal communication systems different from one another operate in a common frequency band.

Furthermore, in the present embodiment, as well as cell-searching is carried out for a frequency which may be used, except non-used frequencies, cell-searching for a small number of frequencies which were used immediately before or in the past, and cell-searching for a radio-signal communication system and a frequency band both having been used immediately before or in the past are carried out together. Thus, it is possible to shorten a period of time necessary for carrying out cell-searching, and reduce power consumption, making it possible to effectively detect an actually used frequency

In the above-mentioned embodiment, a frequency actually detected in cell-searching is stored as an actually-used frequency. It should be noted that even if the mobile phone device 1 does not detect an actually-used frequency, since frequency data included in adjacent-cell data included in annunciation data and measurement control data both transmitted from a base station is considered as an actually used frequency, the frequency may be stored as an actually-used frequency. By storing the frequency as an actually-used frequency, actually-used frequency data increases, and accordingly, non-used frequency data to be determined in accordance with actually-used frequency increases, it would be possible to more effectively detect an actually used frequency

Though the above-mentioned embodiment of the present invention does not refer to a frequency which cannot be detected, it is necessary to delete a frequency which cannot be detected from actually-used frequency data, and determine again non-used frequency data in accordance with actually used frequencies.

The actually-used frequency data may be administrated as follows for instance. (1) The actually-used frequency data may be updated on occasion only with frequencies which were confirmed to be actually used at a certain time. (2) The actually-used frequency data is not updated on occasion, but may be stored without being deleted as data about frequencies having been used in the past (3) Data of presently actually used frequencies and data of frequencies having been actuallv used in the past are stored independently of each other in accordance with frequencies which are confirmed to be used at a certain time and frequencies which are confirmed to have been used in the past

In the above-mentioned (3), data of frequencies having been actually used in the past (A) may be deleted as time during which the mobile phone device is located out of a service area goes by, (B) may be deleted when the mobile phone device moves into a strange country, or (C) may be deleted when the movement of the mobile phone device is detected by means of GPS (Global Positioning System). By carrying out these steps, it is possible to effectively detect actually used frequencies.

By administrating the actually-used frequency data for each of countries or individually administrating the actually-used frequency data together with location data in synchronization with GPS, even if the mobile phone device moves over countries for global roaming, it is possible to effectively detect actually used frequencies in accordance with how frequencies are used in each of countries.

## Claims

1. A mobile communication system including:
a mobile terminal device (1) having means adapted to communicate through one of radio-signal communication systems and at one of frequency bands (12; 15); and
a base station (100; 200) adapted to communicate with the mobile terminal device (1),
wherein the mobile terminal device (1) includes a controller (17) therein, and
the controller (17) is adapted to administrate, as frequency data, both actually-used frequency data indicative of a frequency actually used for each of frequency bands of each of the radio-signal communication systems, and non-used frequency data indicative of a frequency not actually used, determine a non-used frequency in accordance with the actually-used frequency data, determine non-used frequency data for each of frequency bands of each of the radio-signal communication systems in accordance with the thus determined non-used frequency, and stop cell-searching to be carried out to a frequency of a radio-signal communication system administrated with the non-used frequency data, and
the controller (17) is further adapted to carry out the cell-searching only to a frequency of a radio-signal communication system which may be actually used except frequencies of radio-signal communication systems administrated with the non-used frequency data.

2. A mobile terminal device (1) having a means adapted to communicate through one of radio-signal communication systems and at one of frequency bands, and communicate with a base station (100; 200),
wherein the mobile terminal device (1) includes a controller (17) therein, and
the controller (17) is adapted to administrate, as frequency data, both actually-used frequency data indicative of a frequency actually used for each of frequency bands of each of the radio-signal communication systems, and non-used frequency data indicative of a frequency not actually used, determine a non-used frequency in accordance with the actually-used frequency data, determine non-used frequency data for each of frequency bands of each of the radio-signal communication systems in accordance with the thus determined non-used frequency, and stop cell-searching to be carried out to a frequency of a radio-signal communication system administrated with the non-used frequency data, and
the controller (17) is further adapted to carry out the cell-searching only to a frequency of a radio-signal communication system which may be actually used except frequencies of radio-signal communication systems administrated with the non-used frequency data.

3. The mobile communication system as set forth in claim 1 or the mobile terminal device as set forth in claim 2, wherein the controller (17) is further adapted to memorize, as the actually-used frequency data, a frequency having been actually detected in the cell-searching.

4. The mobile communication system as set forth in claim 1 or the mobile terminal device as set forth in claim 2, wherein the controller (17) is further adapted to memorize, as the actually-used frequency data, data of a frequency included in adjacent-cell data included in annunciation data and measurement control data both transmitted from the base station (100; 200).

5. The mobile communication system as set forth in claim 1 or the mobile terminal device as set forth in claim 2, wherein the controller (17) is further adapted to update the actually-used frequency data only with frequencies which are confirmed to be used, at an arbitrary time.

6. The mobile communication system as set forth in claim 1 or the mobile terminal device as set forth in claim 2, wherein the controller (17) is further adapted to memorize a frequency which is confirmed to be used, as past actually-used frequency data, at an arbitrary time.

7. The mobile communication system as set forth in claim 1 or the mobile terminal device as set forth in claim 2, wherein the controller (17) is further adapted to memorize present actually-used frequency data and past actually-used frequency data independently of each other in accordance with a frequency which is confirmed to be used at an arbitrary time and a frequency which is confirmed to have been used in the past.

8. The mobile communication system as set forth in claim 6 or the mobile terminal device as set forth in claim 6, wherein the controller (17) is further adapted to delete the past actually-used frequency data when a period of time during which the mobile terminal device (1) is out of a service area has passed over a predetermined period of time, when the mobile terminal device (1) enters another country, or when movement of the mobile terminal device (1) is detected by a Global Positioning System, GPS, means of the mobile terminal device (1).

9. The mobile communication system as set forth in claim 1 or the mobile terminal device as set forth in claim 2, wherein the controller (17) is further adapted to administrate the actually-used frequency data for each country, or administrate the actually-used frequency data independently of one another together with data indicative of a location of the mobile terminal device (1), provided by a Global Positioning System, GPS, means of the mobile terminal device (1).

10. The mobile communication system as set forth in claim 1 or the mobile terminal device as set forth in claim 2, wherein the mobile terminal device (1) is comprised of a mobile phone device.

11. A method of detecting a frequency used in communication made between a base station (100; 200) and a mobile terminal device (1) having a function of making communication through one of radio-signal communication systems and at one of frequency bands, comprising:
a first step of administrating, as frequency data, both actually-used frequency data indicative of a frequency actually used for each of frequency bands of each of the radio-signal communication systems, and non-used frequency data indicative of a frequency not actually used;
a second step of determining a non-used frequency in accordance with the actually-used frequency data;
a third step of determining non-used frequency data for each of frequency bands of each of the radio-signal communication systems in accordance with the thus determined non-used frequency; and
a fourth step of stopping cell-searching to be carried out to a frequency of a radio-signal communication system administrated with the non-used frequency data,
the first to fourth steps being carried out by the mobile terminal device (1),
the method further comprising, carried out by the mobile terminal device (1), the step of carrying out the cell-searching only to a frequency of a radio-signal communication system which may be actually used except frequencies of radio-signal communication systems administrated with the non-used frequency data.

12. The method of claim 11, further comprising, carried out by the mobile terminal device (1), one of the steps of:
memorizing, as the actually-used frequency data, a frequency having been actually detected in the cell-searching,
memorizing, as the actually-used frequency data, data of a frequency included in adjacent-cell data included in annunciation data and measurement control data both transmitted from the base station (100; 200),
updating the actually-used frequency data only with frequencies which are confirmed to be used, at an arbitrary time,
memorizing present actually-used frequency data and past actually-used frequency data independently of each other in accordance with a frequency which is confirmed to be used at an arbitrary time and a frequency which is confirmed to have been used in the past,
administrating the actually-used frequency data for each country, and
administrating the actually-used frequency data independently of one another together with data indicative of a location of the mobile terminal device (1), provided by a Global Positioning System, GPS, function of the mobile terminal device (1).

13. The method of claim 11, further comprising, carried out by the mobile terminal device (1), the step of memorizing a frequency which is confirmed to be used, as past actually-used frequency data, at an arbitrary time, and,
carried out by the mobile terminal device (1), preferably the step of deleting the past actually-used frequency data when a period of time during which the mobile terminal device (1) is out of a service area has passed over a predetermined period of time, when the mobile terminal device (1) enters another country, or when movement of the mobile terminal device (1) is detected by a Global Positioning System, GPS, function of the mobile terminal device.

14. The method of claim 11, wherein the mobile terminal device (1) is comprised of a mobile phone device.

15. A computer program adapted to perform the steps of the method of any one of claims 11 to 13, when the program is run on a computer.

## Patentansprüche

1. Ein mobiles Kommunikationssystem, einschließend:
Eine mobile Terminalvorrichtung (1) aufweisend Mittel, die angepasst sind, durch eines von Radiosignal-Kommunikationssystemen und bei einer von Frequenzbändern (12; 15) zu kommunizieren; und
eine Basisstation (100; 200), die angepasst ist, mit der mobilen Terminalvorrichtung (1) zu kommunizieren,
wobei die mobile Terminalvorrichtung (1) einen Controller (17) darin einschließt, und
der Controller (17) angepasst ist, als Frequenzdaten beides zu administrieren, tatsächlich benutzte Frequenzdaten, die indikativ für eine Frequenz sind, die tatsächlich für jedes von Frequenzbändern von jeder von den Radiosignal-Kommunikationssystemen benutzt werden, und nicht verwendete Frequenzdaten, die indikativ sind für eine Frequenz, die nicht tatsächlich benutzt wird, zum Ermitteln einer nicht verwendeten Frequenz in Übereinstimmung mit den tatsächlich verwendeten Freqenzdaten, zum Ermitteln der nicht verwendeten Frequenzdaten für jede von Frequenzbändern von jedem der Radiosignal-Kommunikationssysteme in Übereinstimmung mit der so ermittelten nicht verwendeten Frequenz, und zum Beenden des Zellensuchens, das auszuführen ist für eine Frequenz eines Radiosignal-Kommunikationssystems, das administriert wird mit den nicht verwendeten Frequenzdaten, und
wobei der Controller (17) ferner angepasst ist, die Zellensuche nur für eine Frequenz eines Radiosignal-Kommunikationssystems auszuführen, die tatsächlich verwendet werden kann, ausgenommen Frequenzen von Radiosignal-Kommunikationssystemen, die administriert werden mit den nicht verwendeten Frequenzdaten.

2. Eine mobile Terminalvorrichtung (1) aufweisend ein Mittel, das angepasst ist, durch eines von Radiosignal-Kommunikationssystemen und bei einer von Frequenzbändern zu kommunizieren und zum Kommunizieren mit einer Basisstation (100; 200),
wobei die mobile Terminalvorrichtung (1) einen Controller (17) darin einschließt, und
der Controller (17) angepasst ist, als Frequenzdaten beides zu administrieren, tatsächlich benutzte Frequenzdaten, die indikativ für eine Frequenz sind, die tatsächlich für jedes von Frequenzbändern von jeder von den Radiosignal-Kommunikationssystemen benutzt werden, und nicht verwendete Frequenzdaten, die indikativ sind für eine Frequenz, die nicht tatsächlich benutzt wird, zum Ermitteln einer nicht verwendeten Frequenz in Übereinstimmung mit den tatsächlich verwendeten Freqenzdaten, zum Ermitteln der nicht verwendeten Frequenzdaten für jede von Frequenzbändern von jedem der Radiosignal-Kommunikationssysteme in Übereinstimmung mit der so ermittelten nicht verwendeten Frequenz, und zum Beenden des Zellensuchens, das auszuführen ist für eine Frequenz eines Radiosignal-Kommunikationssystems, das administriert wird mit den nicht verwendeten Frequenzdaten, und
wobei der Controller (17) ferner angepasst ist, die Zellensuche nur für eine Frequenz eines Radiosignal-Kommunikationssystems auszuführen, die tatsächlich verwendet werden kann, ausgenommen Frequenzen von Radiosignal-Kommunikationssystemen, die administriert werden mit den nicht verwendeten Frequenzdaten.

3. Das mobile Kommunikationssystem wie ausgeführt in Anspruch 1 oder die mobile Terminalvorrichtung wie ausgeführt in Anspruch 2, wobei der Controller (17) ferner angepasst ist, als die tatsächlich verwendeten Frequenzdaten eine Frequenz zu memorieren, die tatsächlich beim Zellensuchen detektiert wurde.

4. Das mobile Kommunikationssystem wie ausgeführt in Anspruch 1 oder die mobile Terminalvorrichtung wie ausgeführt in Anspruch 2, wobei der Controller (17) ferner angepasst ist, als tatsächliche verwendete Frequenzdaten Daten einer Frequenz zu memorieren, die eingeschlossen ist in benachbarten Zellendaten, die eingeschlossen sind in Ankündigungsdaten und Messsteuerdaten, die beide von der Basisstation (100; 200) übermittelt werden.

5. Das mobile Kommunikationssystem wie ausgeführt in Anspruch 1 oder die mobile Terminalvorrichtung wie ausgeführt in Anspruch 2, wobei der Controller (17) ferner angepasst ist, die tatsächlich verwendeten Frequenzdaten nur mit Frequenzen upzudaten, die als verwendet bestätigt werden, zu einer beliebigen Zeit.

6. Das mobile Kommunikationssystem wie ausgeführt in Anspruch 1 oder die mobile Terminalvorrichtung wie ausgeführt in Anspruch 2, wobei der Controller (17) ferner angepasst ist, als vergangene tatsächlich verwendete Frequenzdaten eine Frequenz, die als zu verwendend bestätigt ist, zu einer beliebigen Zeit zu memorieren.

7. Das mobile Kommunikationssystem wie ausgeführt in Anspruch 1 oder die mobile Terminalvorrichtung wie ausgeführt in Anspruch 2, wobei der Controller (17) ferner angepasst ist, momentane tatsächlich verwendete Frequenzdaten und vergangene tatsächliche Frequenzdaten unabhängig voneinander zu memorieren in Übereinstimmung mit einer Frequenz, die als zu einer beliebigen Zeit zu verwendend bestätigt ist, und einer Frequenz, die als in der Vergangenheit verwendet bestätigt ist.

8. Das mobile Kommunikationssystem wie ausgeführt in Anspruch 6 oder die mobile Terminalvorrichtung wie ausgeführt in Anspruch 6, wobei der Controller (17) ferner angepasst ist, die vergangenen tatsächlich verwendeten Frequenzdaten zu löschen, wenn eine Zeitdauer, während der die mobile Terminalvorrichtung (1) außerhalb eines Servicegebiets ist, über eine vorbestimmte Zeitdauer hinausgegangen ist, wenn die mobile Terminalvorrichtung (1) ein anderes Land betritt oder wenn eine Bewegung der mobilen Terminalvorrichtung (1) detektiert wird durch eine globale Positionssystem-GPS-Einrichtung der mobilen Terminalvorrichtung (1).

9. Das mobile Kommunikationssystem wie ausgeführt in Anspruch 1 oder die mobile Terminalvorrichtung wie ausgeführt in Anspruch 2, wobei der Controller (17) ferner angepasst ist, die tatsächlich verwendeten Frequenzdaten für jedes Land zu administrieren, oder die tatsächlich verwendeten Frequenzdaten unabhängig voneinander zusammen mit Daten zu administrieren, die eine Lokation der mobilen Terminalvorrichtung (1) angeben, die geliefert werden durch eine globale Positionssystem-GPS-Einrichtung der mobilen Terminalvorrichtung (1).

10. Das mobile Kommunikationssystem wie ausgeführt in Anspruch 1 oder die mobile Terminalvorrichtung wie ausgeführt in Anspruch 2, wobei die mobile Terminalvorrichtung (1) eine mobile Telefonvorrichtung aufweist.

11. Ein Verfahren zum Detektieren einer Frequenz, die in einer Kommunikation verwendet wird, die ausgeführt wird zwischen einer Basisstation (100; 200) und einer mobilen Terminalvorrichtung (1), die eine Funktion aufweist zum Ausführen von Kommunikation durch eines von Radiosignal-Kommunikationssystemen und bei einer von Frequenzbändern, aufweisend:
Einen ersten Schritt des Administrierens, als Frequenzdaten, von sowohl tatsächlich verwendeten Frequenzdaten, die eine tatsächlich verwendete Frequenz angeben, die für jedes von Frequenzbändern von jeder der Radiosignal-Kommunikationssyteme verwendet wird, und nicht verwendeten Frequenzdaten, die eine nicht tatsächlich verwendete Frequenz angeben;
einen zweiten Schritt des Ermittelns einer nicht verwendeten Frequenz in Übereinstimmung mit den tatsächlich verwendeten Frequenzdaten;
einen dritten Schritt des Ermittelns von nicht verwendeten Frequenzdaten für jede von Frequenzbändern von jeder der Radiosignal-Kommunikationssysteme in Übereinstimmung mit der so ermittelten nicht verwendeten Frequenz; und
einen vierten Schritt des Beendens des Zellensuchens, das für eine Frequenz eines Radiosignal-Kommunikationssystems auszuführen ist, das mit den nicht verwendeten Frequenzdaten administriert wird,
wobei die ersten bis vierten Schritte ausgeführt werden durch die mobile Terminalvorrichtung (1),
wobei das Verfahren ferner aufweist, ausgeführt durch die mobile Terminalvorrichtung (1), den Schritt des Ausführens der Zellensuche nur für eine Frequenz eines Radiosignal-Kommunikationssystems, die tatsächlich verwendet werden kann, ausgenommen von Frequenzen von Radiosignal-Kommunikationssystemen, die administriert werden mit den nicht verwendeten Frequenzdaten.

12. Das Verfahren nach Anspruch 11, ferner aufweisend, ausgeführt durch die mobile Terminalvorrichtung (1), einen der Schritte:
Memorieren, als die tatsächlich verwendeten Frequenzdaten, einer Frequenz, die tatsächlich detektiert wurde beim Zellensuchen,
Memorieren, als die tatsächlich verwendeten Frequenzdaten, die Daten von einer Frequenz, die in benachbarten Zellendaten eingeschlossen ist, die eingeschlossen ist in Ankündigungsdaten und Messsteuerdaten, die beide von der Basisstation (100; 200) übermittelt werden,
Updaten der tatsächlich verwendeten Frequenzdaten nur mit Frequenzen, die als zu einer beliebigen Zeit zu verwendend bestätigt sind,
Memorieren der momentanen tatsächlich verwendeten Frequenzdaten und vergangener tatsächlich verwendeter Frequenzdaten unabhängig voneinander in Übereinstimmung mit einer Frequenz, die als zu einer beliebigen Zeit zu verwendend bestätigt ist und einer Frequenz, die bestätigt ist als verwendet in der Vergangenheit,
Administrieren der tatsächlich verwendeten Frequenzdaten für jedes Land, und
Administrieren der tatsächlich verwendeten Frequenzdaten unabhängig von einander mit Daten indikativ einer Lokation der mobilen Terminalvorrichtung (1), die geliefert wird durch eine globale Positionssystem-GPS-Funktion der mobilen Terminalvorrichtung (1).

13. Das Verfahren nach Anspruch 11, ferner aufweisend, ausgeführt durch die mobile Terminalvorrichtung (1), den Schritt des Memorierens einer Frequenz, die bestätigt wurde als verwendet als vergangene tatsächlich verwendete Frequenzdaten zu einer beliebigen Zeit, und
ausgeführt durch die mobile Terminalvorrichtung (1), vorzugsweise der Schritt des Löschens der vergangenen tatsächlich verwendeten Frequenzdaten, wenn eine Zeitdauer, während der die mobile Terminalvorrichtung (1) außerhalb eines Servicegebiets ist, eine vorbestimmte Zeitdauer überschritten hat, wenn die mobile Terminalvorrichtung (1) ein anderes Land betritt, oder wenn Bewegung der mobilen Terminalvorrichtung (1) detektiert wird durch eine globale Positionssystem-GPS-Funktion der mobilen Terminalvorrichtung.

14. Das Verfahren nach Anspruch 11, wobei die mobile Terminalvorrichtung (1) aufweist eine mobile Telefonvorrichtung.

15. Ein Computerprogramm, das angepasst ist, die Schritte eines Verfahrens von einem der Ansprüche 11 bis 13 auszuführen, wenn das Programm auf einem Computer abläuft.

## Revendications

1. Système de communication mobile comprenant :
un dispositif terminal mobile (1) ayant des moyens adaptés pour communiquer au moyen d'un des systèmes de communication par signal radio et à une des bandes de fréquences (12 ; 15) ; et
une station de base (100 ; 200) adaptée pour communiquer avec le dispositif terminal mobile (1),
dans lequel le dispositif terminal mobile (1) comprend un dispositif de contrôle (17) à l'intérieur, et
le dispositif de contrôle (17) est adapté pour administrer, en tant que données de fréquence, à la fois des données de fréquence effectivement utilisées indicatives d'une fréquence utilisée effectivement pour chacune des bandes de fréquences de chacun des systèmes de communication par signal radio, et des données de fréquence non utilisées indicatives d'une fréquence non utilisée effectivement, déterminer une fréquence non utilisée conformément aux données de fréquence utilisées effectivement, déterminer des données de fréquence non utilisées pour chacune des bandes de fréquences de chacun des systèmes de communication par signal radio conformément à la fréquence non utilisée ainsi déterminée, et arrêter la recherche cellulaire devant être effectuée à une fréquence d'un système de communication par signal radio administré avec les données de fréquence non utilisées, et
le dispositif de contrôle (17) est en outre adapté pour effectuer la recherche cellulaire uniquement à une fréquence d'un système de communication par signal radio qui peut être utilisé effectivement à l'exception de fréquences de systèmes de communication par signal radio administrés avec les données de fréquence non utilisées.

2. Dispositif terminal mobile (1) ayant des moyens adaptés pour communiquer au moyen d'un des système de communication par signal radio et à une des bandes de fréquences, et communiquer avec une station de base (100 ; 200),
dans lequel le dispositif terminal mobile (1) comprend un dispositif de contrôle (17) à l'intérieur, et
le dispositif de contrôle (17) est adapté pour administrer, en tant que données de fréquence, à la fois des données de fréquence effectivement utilisées indicatives d'une fréquence utilisée effectivement pour chacune des bandes de fréquences de chacun des systèmes de communication par signal radio, et des données de fréquence non utilisées indicatives d'une fréquence non utilisée effectivement, déterminer une fréquence non utilisée conformément aux données de fréquence utilisées effectivement, déterminer des données de fréquence non utilisées pour chacune des bandes de fréquences de chacun des systèmes de communication par signal radio conformément à la fréquence non utilisée ainsi déterminée, et arrêter la recherche cellulaire devant être effectuée à une fréquence d'un système de communication par signal radio administré avec les données de fréquence non utilisées, et
le dispositif de contrôle (17) est en outre adapté pour effectuer la recherche cellulaire uniquement à une fréquence d'un système de communication par signal radio qui peut être utilisé effectivement à l'exception de fréquences de systèmes de communication par signal radio administrés avec les données de fréquence non utilisées.

3. Système de communication mobile selon la revendication 1 ou dispositif terminal mobile selon la revendication 2, dans lequel le dispositif de contrôle (17) est en outre adapté pour mémoriser, en tant que données de fréquence effectivement utilisées, une fréquence ayant été effectivement détectée dans la recherche cellulaire.

4. Système de communication mobile selon la revendication 1 ou dispositif terminal mobile selon la revendication 2, dans lequel le dispositif de contrôle (17) est en outre adapté pour mémoriser, en tant que données de fréquence effectivement utilisées, des données d'une fréquence comprise dans des données de cellule adjacente comprises dans des données indicatrices et des données de commande de mesure toutes deux transmises depuis la station de base (100 ; 200).

5. Système de communication mobile selon la revendication 1 ou dispositif terminal mobile selon la revendication 2, dans lequel le dispositif de contrôle (17) est en outre adapté pour actualiser les données de fréquence utilisées effectivement uniquement avec des fréquences qui sont confirmées pour être utilisées, à un moment arbitraire.

6. Système de communication mobile selon la revendication 1 ou dispositif terminal mobile selon la revendication 2, dans lequel le dispositif de contrôle (17) est en outre adapté pour mémoriser une fréquence qui est confirmée pour être utilisée, en tant que données de fréquence effectivement utilisées passées, à un moment arbitraire.

7. Système de communication mobile selon la revendication 1 ou dispositif terminal mobile selon la revendication 2, dans lequel le dispositif de contrôle (17) est en outre adapté pour mémoriser des données de fréquence effectivement utilisées présentes et des données de fréquences effectivement utilisées passées indépendamment les unes des autres conformément à une fréquence qui est confirmée pour être utilisée à un moment arbitraire et une fréquence qui est confirmée pour avoir été utilisée dans le passé.

8. Système de communication mobile selon la revendication 6 ou dispositif terminal mobile selon la revendication 6, dans lequel le dispositif de contrôle (17) est en outre adapté pour supprimer les données de fréquence effectivement utilisées passées lorsqu'une période de temps pendant laquelle le dispositif terminal mobile (1) est hors d'une zone de service, s'est écoulée sur une période de temps prédéterminée, lorsque le dispositif terminal mobile (1) pénètre dans un autre pays, ou lorsque le mouvement du dispositif terminal mobile (1) est détecté par un système de positionnement mondial, GPS, moyens du dispositif terminal mobile (1).

9. Système de communication mobile selon la revendication 1 ou dispositif terminal mobile selon la revendication 2, dans lequel le dispositif de contrôle (17) est en outre adapté pour administrer les données de fréquence utilisées effectivement pour chaque pays, ou administrer les données de fréquence utilisées effectivement indépendamment l'une de l'autre conjointement avec des données indicatives d'un emplacement du dispositif terminal mobile (1), fourni par un système de positionnement mondial, GPS, moyens du dispositif terminal mobile.

10. Système de communication mobile selon la revendication 1 ou dispositif terminal mobile selon la revendication 2, dans lequel le dispositif terminal mobile (1) est composé d'un dispositif de téléphone mobile.

11. Procédé de détection d'une fréquence utilisé dans une communication réalisée entre une station de base (100 ; 200) et un dispositif terminal mobile (1) ayant une fonction de réalisation de communication au moyen d'un des systèmes de communication par signal radio et à une des bandes de fréquence, comprenant :
une première étape d'administration, en tant que données de fréquence, à la fois des données de fréquence utilisées effectivement indicatives d'une fréquence utilisée effectivement pour chacune des bandes de fréquence de chacun des systèmes de communication par signal radio, et des données de fréquence non utilisées indicatives d'une fréquence non utilisée effectivement ;
une deuxième étape de détermination d'une fréquence non utilisée conformément aux données de fréquence utilisées effectivement ;
une troisième étape de détermination de données de fréquence non utilisées pour chacune des bandes de fréquence de chacun des systèmes de communication par signal radio conformément à la fréquence non utilisée ainsi déterminée ; et
une quatrième étape d'arrêt de recherche cellulaire à effectuer à une fréquence d'un système de communication par signal radio administré avec les données de fréquence non utilisées,
les première à quatrième étapes étant effectuées par le dispositif terminal mobile (1),
le procédé comprenant en outre, effectuée par le dispositif terminal mobile (1), l'étape de réalisation de la recherche cellulaire uniquement à une fréquence d'un système de communication par signal radio qui peut être utilisé effectivement à l'exception des fréquences des systèmes de communication par signal radio administrés avec les données de fréquence non utilisées.

12. Procédé selon la revendication 11, comprenant en outre, effectuée par le dispositif terminal mobile (1), l'une des étapes de :
mémorisation, en tant que données de fréquence utilisées effectivement, d'une fréquence ayant été détectée effectivement dans la recherche cellulaire,
mémorisation, en tant que données de fréquence utilisées effectivement, des données d'une fréquence comprise dans des données de cellule adjacente comprises dans des données indicatrices et des données de commande de mesure toutes deux transmises depuis la station de base (100 ; 200),
actualisation des données de fréquence utilisées effectivement uniquement avec des fréquences qui sont confirmées pour être utilisées, à un moment arbitraire,
mémorisation des données de fréquence effectivement utilisées présentes et des données de fréquences effectivement utilisées passées indépendamment les unes des autres conformément à une fréquence qui est confirmée pour être utilisée à un moment arbitraire et une fréquence qui est confirmée pour avoir été utilisée dans le passé,
administration des données de fréquence utilisées effectivement pour chaque pays, et
administration des données de fréquence utilisées effectivement indépendamment l'une de l'autre avec des données indicatives d'un emplacement du dispositif terminal mobile (1), fourni par un système de positionnement mondial, GPS, fonction du dispositif terminal mobile (1).

13. Procédé selon la revendication 11, comprenant en outre, effectuée par le dispositif terminal mobile (1), l'étape de mémorisation d'une fréquence qui est confirmée pour être utilisée, en tant que données de fréquence utilisées effectivement passées, à un moment arbitraire, et
effectuée par le dispositif terminal mobile (1), de préférence l'étape de suppression des données de fréquence utilisées effectivement passées lorsqu'une période de temps pendant laquelle le dispositif terminal mobile (1) est hors d'une zone de service, s'est écoulée sur une période de temps prédéterminée, lorsque le dispositif terminal mobile (1) pénètre dans un autre pays, ou lorsque le mouvement du dispositif terminal mobile (1) est détecté par un système de positionnement mondial, GPS, fonction du dispositif terminal mobile.

14. Procédé selon la revendication 11, dans lequel le dispositif terminal mobile (1) est composé d'un dispositif de téléphone mobile.

15. Programme d'ordinateur adapté pour réaliser les étapes du procédé de l'une quelconque des revendications 11 à 13, lorsque le programme fonctionne sur un ordinateur.
